# EUROPÄISCHE PATENTANMELDUNG

(11) **EP 0 828 166 A2**
(43) Veröffentlichungstag der Anmeldung: **11.03.1998**
(21) Anmeldenummer: 97250256.1
(22) Anmeldetag: 02.09.1997
(51) Int. Cl.: G01V 8/12, E05F 15/00

(54) **Vorrichtung zur Steuerung des Schliessvorgangs von im wesentlichen translatorisch verstellbaren, motorisch angetriebenen Bauteilen**

(30) Priorität: 02.09.1996 DE 19636347
(71) Anmelder: Brech, Jörg, 14169 Berlin (DE)
(72) Erfinder: Brech, Jörg, 14169 Berlin (DE); Voigt, Matthias, 12165 Berlin (DE)
(74) Vertreter: Ninnemann, Detlef, Dipl.-Ing.

(57) **Zusammenfassung**

Sicherheitseinrichtung zur Schließkantenabsicherung von Toren, welche mit einem Antrieb und einer Bremseinrichtung ausgestattet sind.

Die bekannten Einrichtungen zur Torschließkantenabsicherung weisen bauartspezifische Probleme auf. So müssen elastomere Abschlußprofile, mit innenliegender Sicherheitseinrichtung vollständig zusammengedrückt werden bis Hindernisse erkannt werden. Der Bremsimpuls wird also erst dann ausgelöst, wenn das elastomere Hohlprofil praktisch keine Knautschzone mehr darstellt. In Folge des Tornachlaufes wirken somit auf das Hindernis hohe Kräfte, die zu Verletzungen und Beschädigungen führen können. Die neue Einrichtung gibt bereits bei minimalem Kontakt des Abschlußhohlprofiles mit einem Hindernis ein Bremssignal an die Torsteuerung.

Der Schließkante entlang verläuft ein elastomeres Hohlprofil, in dem eine dynamisch auswertende optoelektronische Einheit wirkt. Effekt ist, daß bereits geringste Verformungen des Hohlprofils eine ausreichende Veränderung des Empfangssignalpegels bewirken. Die elektronische Schaltung kann diese dynamische Veränderung erkennen und einen Bremsimpuls auslösen.

Einrichtung zur Schließkantenabsicherung an Horizontal- und Vertikaltoren, insbesondere Schnellauftoren oder Schiebe- oder Klapp-Schiebetüren in Gebäuden oder Fahrzeugen.

## Beschreibung

Die Erfindung betrifft eine Vorrichtung zur Steuerung des Schließvorgangs von im wesentlichen translatorisch verstellbaren, motorisch angetriebenen Bauteilen, insbesondere zur Schließkantenabsicherung von Türen oder Toren gemäß dem Oberbegriff des Anspruchs 1.

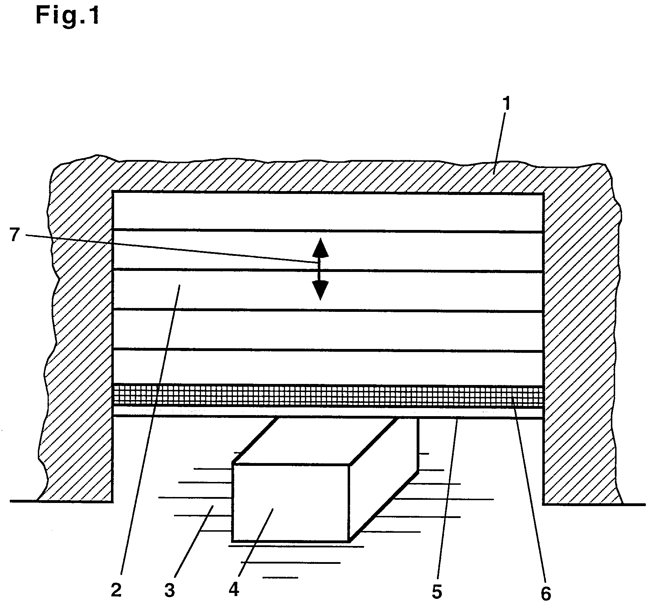

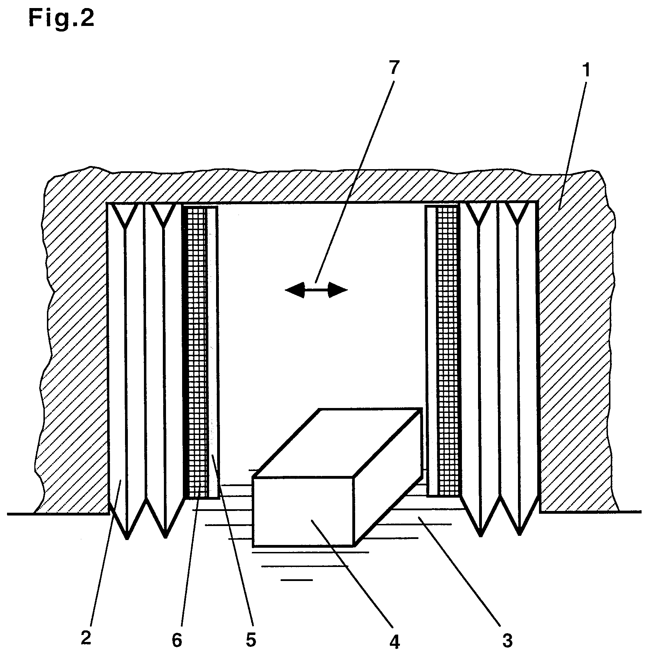

Tore, die mit einem Antrieb und einer Bremseinrichtung ausgestattet sind, können in den vielfältigsten Varianten ausgeführt sein. Bei einem in Fig.1 schematisch dargestellten Horizontaltor werden meist flexible Torelemente im oberen Bereich des Tores zum Öffnen des Tores auf- und zum Schließen des Tores abgewickelt. Bei einem in Fig.2 schematisch dargestellten Vertikaltoren werden meist ein oder mehr Torblätter im oberen Bereich des Tores geführt. Der Öffnungs- bzw. Schließvorgang erfolgt durch eine horizontal verlaufende Bewegung der Torblätter, ähnlich einer Aufzugstür. In beiden Fällen sind die Schließkanten mit einem versteifenden Abschlußprofil ausgestattet, an dem sich eine Sicherheitseinrichtung zum Abschalten bzw. Bremsen des Torantriebes beim Auftreffen der Schließkante auf ein Hindernis befindet.

Beim Öffnen und Schließen des Tores werden die Torblätter, deren Schließkanten im allgemeinen mit Kunststoff- oder Aluminiumprofilen versteift sind, mit hoher Geschwindigkeit bewegt. Beim Schließvorgang kann die Schließkante dabei mit großer Wucht und entsprechender Verletzungs- bzw. Beschädigungsgefahr auf Personen oder Gegenstände treffen, die sich im Bereich des Tores befinden. Besonders groß ist die Gefahr bei sogenannten Schnellauftoren. Um Sicherheit im Schließbereich von Toren zu erlangen, sind die Schließkanten mit entsprechenden Sicherheitseinrichtungen auszustatten. Dies kann z.B. durch ein entlang der Schließkante verlaufendes, elastomeres Hohlprofil mit innenliegender Sicherheitseinrichtung erfolgen. Aufgrund der kinetischen Energie beim Schließen eines Tores ergibt sich ein unvermeidbarer Bremsweg. Beim Auftreffen auf ein Hindernis gibt das elastomere Hohlprofil nach und reduziert so die Verletzungs- bzw. Beschädigungsgefahr. Bei Betätigung der Sicherheitseinrichtung wird die Motorbremse ausgelöst, was zum Anhalten des Tores führt.

Üblicherweise wird als Sicherheitseinrichtung in elastomeren Hohlprofilen ein Seilzug eingesetzt, an dessen Ende sich ein elektrischer Schalter befindet.

Beim Auftreffen auf ein Hindernis wird das Seil gespannt und der Schalter somit betätigt. Weiterhin sind Sicherheitseinrichtungen bekannt, bei denen im elastomeren Hohlprofil zwei Kontaktleisten mit Abschlußwiderstand oder -diode verlaufen. Beim Zusammendrücken des elastomeren Hohlprofils wird durch Berührung der beiden Kontaktleisten der elektrische Widerstand reduziert. Eine elektronische Folgeschaltung, meist als Schaltgerät ausgeführt, erkennt diese Widerstandsänderung und gibt ein Schaltsignal an die Bremseinrichtung zum Anhalten des Tores.

Aus der EP-A-0 143 712 ist eine Sicherheitseinrichtung zur Schließkantenabsicherung von Toren bekannt, bei der ein druckempfindlicher Schalter den Druck in einem elastomeren Schlauch innerhalb des elastomeren Hohlprofils überwacht. Beim Zusammendrücken des elastomeren Hohlprofils steigt im Inneren des Schlauches. Dadurch wird der druckempfindliche Schalter betätigt und die Bremseinrichtung des Tores wird aktiviert.

Durch den ansteigenden Druck, beim Zusammendrücken des elastomeren Hohlprofils, löst der druckempfindliche Schalter aus, wodurch die Bremseinrichtung des Tores aktiviert wird.

Aus dem DE-U-8 615 042 ist ein elastomeren Hohlprofil als Sicherheitseinrichtung bekannt, das an einem Ende mit einer Glühlampe und am anderen Ende mit einem lichtempfindlichen Widerstand versehen ist. Beim Auftreffen auf ein Hindernis wird das Hohlprofil zusammengedrückt und der lichtempfindliche Widerstand abgedunkelt, so daß ein Schaltimpuls erzeugt wird, der die Motorbremse auslöst.

Aus der EP 0 284 066 B2 und der EP 0 325 602 B1 ist eine mechanische Vorrichtung zur Aufnahme einer Sicherheitseinrichtung bekannt. Dabei handelt es sich um jeweils eine Halterung für das Geber- und Nehmerelement, die sich an den gegenüberliegenden Enden der Schließkante des Tores befinden und beim Auftreffen auf den Boden in das Abschlußprofil einfahren.

Die bisher bekannten Verfahren zeigen verschiedene Nachteile und Risiken. Bei Systemen, die innerhalb eines elastomeren Hohlprofils liegen, besteht das Problem, daß der Querschnitt des Hohlprofils zum Auslösen des Schaltimpulses nahezu völlig zusammen gedrückt werden muß. Der Bremsimpuls wird also erst dann ausgelöst, wenn das elastomere Hohlprofil praktisch keine Knautschzone mehr darstellt. In Folge des Tornachlaufes wirken somit auf das Hindernis hohe Kräfte, die zu Verletzungen und Beschädigungen führen können.

In der Praxis sind die beschriebenen Sicherheitseinrichtungen häufig extremen Umweltbedingungen ausgesetzt, da insbesondere bei Horizontaltoren das elastomere Hohlprofil fest auf dem Boden auf liegen muß, um hier einen dichtenden Torabschluß zu erhalten. Hieraus ergibt sich der ständige Kontakt mit Schmutz, Feuchtigkeit, Schnee, Chemikalien und anderen aggressiven Umwelteinflüssen. Ein weiteres Problem stellen die Vibrationen beim Torlauf für die Sicherheitseinrichtungen dar.

Bei der beschriebenen Seilzugeinrichtung sind als Nachteile die Alterung des Seils und die Verschmutzung bzw. die Oxidation der Schalterkontakte zu nennen.

Bei den innerhalb von elastomeren Hohlprofilen verlaufenden Kontaktleisten führen Verschmutzungen und Oxidationen zu Störungen, was bis zum völligen Ausfall der Schutzfunktion führen kann.

Das aus der EP-A-0 143 712 nekannte Verfahren benutzt druckempfindliche Schalter und Schlauchsysteme, die durch mechanische Beschädigung leicht ausfallen können. In der Praxis können mit diesem System nur relativ kleine Torbreiten überwacht werden, da sonst kein ausreichender Druckanstieg auftritt. Ein weiteres Problem stellen die atmosphärischen Luftdruckschwankungen dar. Ferner führen nur solche Hindernisse zum sicheren Auslösen des Bremsimpulses, die das Schlauchsystem großflächig eindrücken.

Bei dem aus dem DE-U-8 615 042 bekannten Verfahren, welches eine Glühlampe und einen lichtempfindlichen Widerstand zur Überwachung der Torschließkante benutzt, treten durch Vibrationen beim Torlauf häufig Glühlampendefekte durch reißende Glühwendeln auf. Selbst unter optimalen Einsatzbedingungen erreichen Glühlampen keine industrietauglichen Lebenserwartungen. Ein weiterer Nachteil dieses Systems besteht darin, daß durch das ständige Auftreffen des Hohlprofils auf dem Boden und den dadurch bedingten kleinen Beschädigungen im elastomeren Material Licht eintreten kann. Trifft dieses Fremdlicht auf den lichtempfindlichen Widerstand, so fällt diese Sicherheitseinrichtung vollständig aus.

Die aus der EP 0 284 066 B2 und der EP 0 325 602 B1 bekannten Verfahren verwenden bewegliche mechanische Aufnahmen für das Geber- und Nehmerelement. Diese eilen der Abschlußkante vor und tauchen beim Auftreffen auf den Boden in diese ein und müssen beim Öffnen des Tores wieder ausfahren. Hierdurch sind Geber- und Nehmerelemente mit ihren Anschlußkabeln erheblichen dynamischen Belastungen ausgesetzt. Eine sichere Funktion dieses Systems ist maßgeblich von der Leichtgängigkeit der mechanischen Aufnahmen abhängig. Da diese Sicherheitseinrichtung nur in Horizontaltoren eingesetzt werden kann, sind die beweglichen Teile beim geschlossenen Tor den genannten Umwelteinflüssen ausgesetzt. Dies kann zur Schwergängigkeit bzw. zum Verklemmen der bewegten Teile führen. in diesem Fall geht von denhervorstehenden Aufnahmen eine erhebliche Verletzungsgefahr aus. Darüber hinaus führen die möglicherweise nicht vollständig ausgefahrenen Aufnahmen dazu, daß der gewünschte Vorlauf der Geber-/ Nehmereinheit nicht mehr gewährleistet ist und das Tor somit nicht innerhalb der verringerten Vorlaufzeit zum Anhalten kommt. Ein weiterer Nachteil ist, daß der Bereich zwischen der voreilenden Sicherheitseinrichtung und dem Torabschluß nicht überwacht werden kann.

Der vorliegenden Erfindung liegt die Aufgabenstellung zugrunde, eine Vorrichtung zur Steuerung des Schließvorgangs von im wesentlichen translatorisch verstellbaren, motorisch angetriebenen Bauteilen, insbesondere zur Schließkantenabsicherung von Türen oder Toren zu schaffen, die bereits bei minimalem Kontakt der Schließkante mit einem Hindernis ein Schaltsignal zum Abbremsen des Tores abgibt und den einsatzbedingten Umwelteinflüssen standhält.

Diese Aufgabe wird durch die Merkmale des Anspruchs 1 gelöst.

Die erfindungsgemäße Lösung gewährleistet, daß bereits bei einem minimalem Kontakt der Schließkante mit einem Hindernis ein Schaltsignal zum Abbremsen des Tores abgegeben wird und den einsatzbedingten Umwelteinflüssen genügt wird.

Eine vorteilhafte Ausgestaltung der erfindungsgemäßen Lösung ist dadurch gekennzeichnet, daß die Auswerteinrichtung eine Schaltung zur dynamischen Auswertung eines Ausgangssignals des Empfängers, die bei einer einstellbaren Veränderung des Ausgangssignalpegels das Steuersignal zum Abbremsen und/oder zur Richtungsumkehr des Bauteils abgibt, sowie eine Schaltung zur statischen Auswertung eines Ausgangssignals des Empfängers enthält.

Eine Weiterbildung der erfindungsgemäßen Lösung ist dadurch gekennzeichnet, daß die optoelektronische Einrichtung in einem entlang der Schließkante des Bauteils verlaufenden elastischen Hohlprofil angeordnet ist. Vorzugsweise ist in einem elastomeren Hohlprofil an dem einen Ende ein Lichtsender und am gegenüberliegenden Ende ein Lichtempfänger eingebaut ist. Die spezielle Auswertung erfolgt über ein separates Schaltmodul.

Der vom Lichtsender ausgesendete gepulste Lichtstrahl verläuft im Inneren des elastomeren Hohlprofils, wird vom Lichtempfänger aufgenommen und vom Schaltmodul ausgewertet. Beim Zusammendrücken des elastomeren Hohlprofils wird der Lichtstrahl unterbrochen, was durch das Lichtschrankensystem, bestehend aus den oben genannten Komponenten, statisch erfaßt wird und den Bremsimpuls auslöst. Zusätzlich ist das Lichtschrankensystem in der Lage, kleinste dynamische Lichtmengenänderungen sicher zu erkennen und als Folge einen Bremsimpuls auszugeben.

Effekt ist, daß bereits bei der geringsten Querschnittsänderung oder -verformung des elastomeren Hohlprofils eine ausreichende dynamische Lichtmengenänderung am Lichtempfänger auftritt, welche durch das Schaltmodul erkannt wird und zum sofortigen Abbremsen der Torbewegung führt. Das elastomere Hohlprofil wirkt dadurch beim Auftreffen auf ein Hindernis mit nahezu seinem gesamten Durchmesser als Knautschzone. Auftretende Beschädigungen des elastomeren Hohlprofils bewirken keine Beeinträchtigung der sicheren Schutzfunktion. Ein wesentliches Merkmal der erfindungsgemäßen Einrichtung ist, daß keine mechanisch bewegten Teile verwendet werden.

Eine weitere vorteilhafte Ausgestaltung der erfindungsgemäßen Lösung ist dadurch gekennzeichnet, daß der Sender und der Empfänger mit einer Kunstharz-Vergußmasse ausgegossen sind.

Aufgrund des mechanischen Aufbaus von Sender und Empfänger in vollvergossenen Gehäusen und den integrierten elektronischen Komponenten sind sie gegenüber Vibrationen und aggressiven Umweltbedingungen sehr gut geschützt. Dadurch ist diese Sicherheitseinrichtung praktisch verschleiß- und wartungsfrei.

Mit dieser Erfindung ist es möglich, Horizontaltore, Vertikaltore sowie andere translatorisch oder schwenkbar-translatorisch bewegte Bauteile wie Schiebetüren in Gebäuden oder Fahrzeugen oder dgl. mit einer oder mehreren Schließkanten zu überwachen.

Das Lichtschrankensystem kann in einer Ausgestaltung der Erfindung als Reflexionslichtschranke ausgeführt sein. Bei dieser Variante befinden sich der Sender und der Empfänger gemeinsam auf der einen Seite des Tores. Am gegenüberliegenden Ende des elastomeren Hohlprofils befindet sich der Retroretlektor, welcher das vom Sender ausgestrahlte Licht zum Empfänger zurück reflektiert.

In einer weiteren Ausführungsvariante der Erfindung kann diese zusätzlich mit einer Selbsttesteinrichtung ausgestattet werden. Die Selbsttesteinrichtung kann manuell durch einen elektrischen Taster oder automatisch durch die Torsteuerung angesteuert werden. Bei der Aktivierung der Selbsttesteinrichtung wird von dieser der Sendetakt des Lichtsenders abgeschaltet. Die so simulierte Lichtstrahlunterbrechung bewirkt eine negative dynamische Änderung des Empfangssignals im Lichtempfänger und zusätzlich eine statische Änderung von maximalem zu keinem Empfangssignal. Das Schaltmodul erkennt diese Änderungen und reagiert daraufhin entsprechend mit einem Bremssignal.

Die Torsteuerung kann bei der automatischen Ansteuerung der Selbsttesteinrichtung und der entsprechenden anschließenden Signalauswertung die Sicherheitseinrichtung, z.B. zyklisch oder vor jedem Torschließvorgang auf ihre Funktion überwachen. Für den Fall eines Defektes erhält die übergeordnete Torsteuerung keine korrekte Signalantwort auf das Testsignal und kann den Torantrieb vollständig abschalten. Dadurch können gefährliche Situationen selbst bei nicht korrekt funktionierender Sicherheitseinrichtung praktisch ausgeschlossen werden.

Die Erfindung soll nachfolgend anhand eines Ausführungsbeispiels näher erläutert werden. Es zeigen:
- Fig. 1 -: eine schaematische Ansicht eines Horizontaltores;
- Fig. 2 -: eine schematische Ansicht eines Vertikaltors;
- Fig. 3 -: eine Detailansicht der Schließkante;
- Fig. 4 -: ein Schnittbild durch die Schließkante gemäß Fig. 3;
- Fig. 5 -: einen Längsschnitt durch den von Sender und Empfänger;
- Fig. 6 -: ein Blockschaltbild der Auswerteinrichtung.

Die erfindungsgemäße Vorrichtung wird nachfolgend anhand eines in Figur 1 schematisch dargestellten Horizontaltores sowie eines in Figur 2 dargestellten Vertikaltores erläutert, kann aber auf verschiedene Tür- und Torformen angewendet werden, beispielsweise für Schiebetüren, Schwenk- und Schiebetüren, wie sie beispielsweise in Bahnfahrzeugen verwendet werden, sowie für Schwenktore, wie sie unter anderem bei Garagen eingesetzt werden.

Das in Figur 1 schematisch dargestellte Horizontaltor weist mehrere Torblätter 2 auf, die in einer mit einer Gebäudewand 1 verbundenen Schienenführung geführt sind. Das Horizontaltor kann mittels eines nicht näher dargestellten motorischen Antriebs in Richtung des Doppelpfeils 7 zwischen einer Offenstellung und einer Schließstellung bewegt werden, in der die an ein versteifendes Abschlußprofil angrenzende Schließkante des Horizontaltores auf einem Boden 3 aufliegt.

Beim Erreichen des Bodens 3 bzw. beim Auftreten eines Hindernisses 4 soll der Antrieb des Horizontaltores unverzüglich gestoppt und gegebenenfalls zur Freigabe eines Hindernisses kurzfristig in Öffnungsrichtung bewegt werden.

Figur 2 zeigt schematisch ein Vertikaltor, das aus zwei in Öffnungs- und Schließrichtung entsprechend dem Doppelpfeil 7 gegeneinander beweglichen Flügeln mit Torblättern 2 besteht, deren einander zugewandte Enden mit einem versteifenden Abschlußprofil 6 versehen sind, an das die Schließkante der Torblätter 2 angrenzt. Die Torblätter 2 bewegen sich parallel zu einem Boden 3 zwischen einer Öffnungs- und Schließstellung, in denen die Schließkanten aneinanderstoßen bzw. an die Seiten der Gebäudewand 1 angrenzen. Vorzugsweise sind die Schließkanten mit einem elastomeren Hohlprofil versehen, in dem entsprechend einer bevorzugten Ausführung der Erfindung eine Sicherheits-Abschaltvorrichtung angeordnet ist.

Berührt ein Hindernis 4 die eine oder andere Schließkante des zweiflügligen Vertikaltores oder stoßen die beiden Schließkanten der Torflügel aneinander, wird durch die Sicherheits-Abschaltvorrichtung der Schließvorgang beendet bzw. nach einer weiteren Ausführungsform der Erfindung beim Einklemmen eines Hindernisses 4 kurzfristig in die Öffnungsrichtung bewegt.

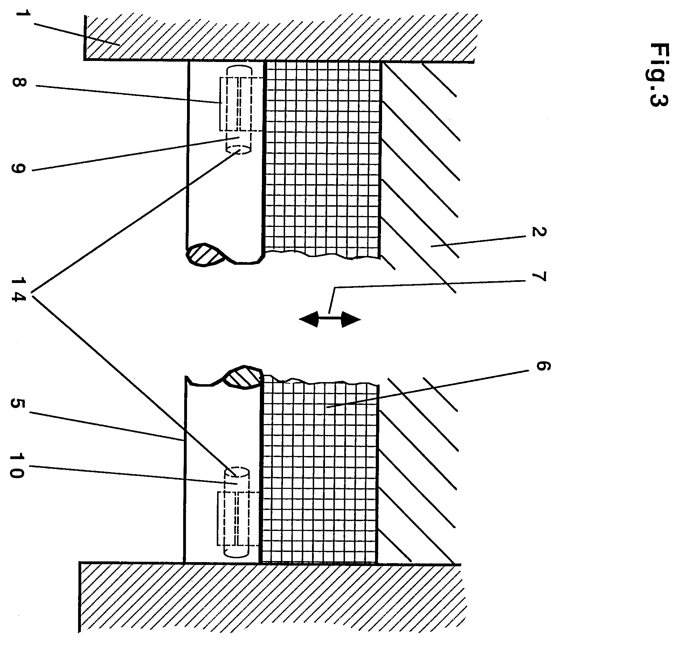

Figur 3 zeigt in einer vergrößerten Darstellung die Schließkante eines Horizontaltores, wobei gleiche Bezugsziffern wie in Figur 1 gleiche Bauelemente bezeichnen.

Die Sicherheits-Abschaltvorrichtung ist als optoelektronische Einrichtung ausgeführt, die aus einem Sendemodul 9 und einem Empfangsmodul 10 besteht. Das Sendemodul 9 und das Empfangsmodul 10 sind innerhalb des entlang der Schließkante verlaufenden elastomeren Hohlprofils 5 angeordnet und mit Aufnahmebefestigungen 8 am versteifenden Abschlußprofil 6 befestigt.

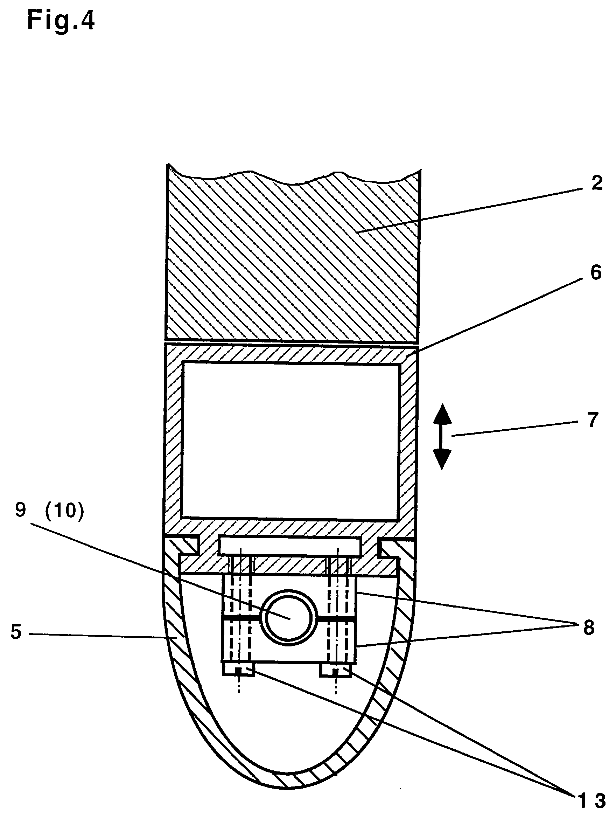

Figur 4 zeigt einen Schnitt durch das Horizontaltor gemäß Figur 3 und verdeutlicht die Befestigung des Sende- bzw. Empfangsmoduls 9, 10 an dem versteifenden Abschlußprofil sowie die Anordnung eines Kabelabschlußdeckels 13 in Verbindung mit dem Sende- bzw. Empfangsmodul 9, 10, die innerhalb eines elastomeren Hohlprofils 5 mit den Aufnahmebefestigungen 8 am versteifenden Abschlußprofil 6 montiert werden.

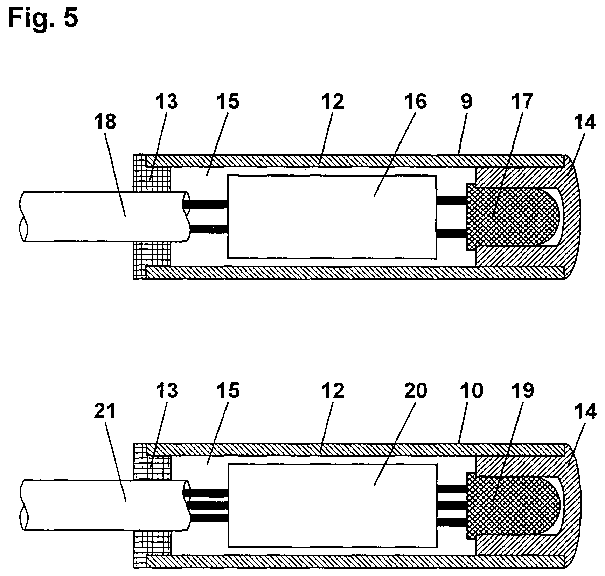

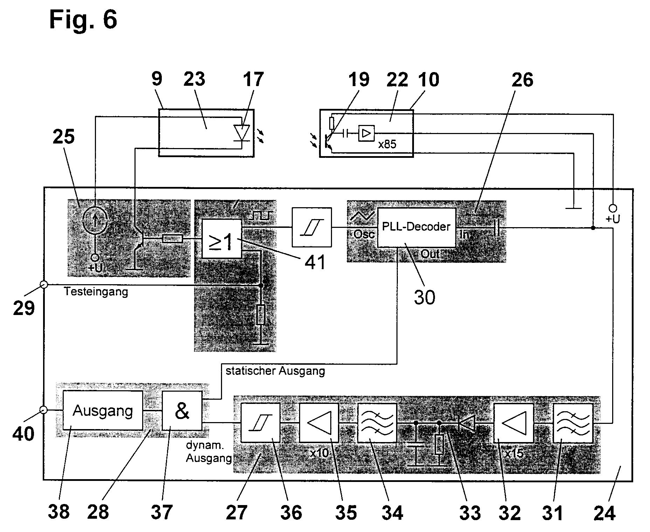

Figur 5 zeigt einen Schnitt durch das Sende- und Empfangsmodul 9, 10. Das Sendemodul 9 besteht aus einer Infrarot-Sendediode 17 mit einer Wellenlänge von 880 nm. Die Infrarot-Sendediode 17 wird von einer Senderansteuerung 25 der in Figur 6 dargestellten Auswerteinrichtung 24 mit einem gepulsten Strom von 5 kHz und einem Puls-Pausen-Verhältnis von 1:1 betrieben. Eine Anschlußplatine 16 des Senders ist zwischen der Infrarot-Sendediode 17 und einem Anschlußkabel 18 angeordnet, das durch einen Kabelabschlußdeckel 13 geführt ist. Das Sendemodul 9 weist ein zylindrisches Metallgehäuse 12 auf, welches aus vernickeltem Messing besteht. Als optischer Abschluß 14 wird ein Kunststoff verwendet, der für infrarotes Licht durchlässig ist. Das Gehäuse 12 des Sendemoduls 9 wird zum Schutz der elektronischen Bauteile gegen Vibrationen und Umwelteinflüsse voll mit Kunstharz-Vergußmasse 15 ausgegossen.

Das vom Sendemodul 9 abgegebene Lichtsignal wird in das elastomere Hohlprofil 5 gestrahlt und trifft am Profilende auf das Empfangsmodul 10, das als Empfangselement einen Phototransistor 19 besitzt. Die Ausgangsspannung des Phototransistors 19 wird in einem im Empfängergehäuse 12 auf einer Anschlußplatine des Empfangsmoduls 10 angeordneten Vorverstärker verstärkt und an die Auswerteinrichtung 24 gemäß Figur 6 über ein dreiadriges Anschlußkabel 21 ausgegeben, das durch einen Kabelabschlußdeckel 13 geführt ist.

Das Empfangsmodul 10 weist ein zylindrisches Metallgehäuse 12 auf, welches aus vernickeltem Messing besteht. Als optischer Abschluß 14 wird ein Kunststoff verwendet, der für infrarotes Licht durchlässig ist. Da dieser infrarotdurchlässige Optikabschluß 14 für sichtbares Licht undurchlässig ist, wird er bei dem Empfangsmodul 10 gleichzeitig als Tageslichtsperrfilter benutzt. Das Gehäuse 12 des Empfangsmoduls 9 wird zum Schutz der elektronischen Bauteile gegen Vibrationen und Umwelteinflüsse voll mit Kunstharz-Vergußmasse 15 ausgegossen.

Figur 6 zeigt ein Blockschaltbild der Auswerteinrichtung 24 sowie deren Verbindung mit dem Sendemodul 9 und dem Empfangsmodul 10.

Die Auswerteinrichtung 24 befindet sich außerhalb der Schließkante mit der Torsteuerung zusammen in einem gemeinsamen Gehäuse. In der Auswerteinrichtung 24 wird das Signal gleichzeitig durch zwei Verarbeitungseinheiten 26, 27 statisch und dynamisch ausgewertet.

Die Schaltung zur statischen Auswertung 26 enthält einen PLL-Decoder 30, der mit seinem integrierten Oszillator auch den Sendetakt erzeugt und das Empfangssignal demoduliert. Aus diesem demodulierten Signal wird mit Hilfe des im PLL-Decoder 30 integrierten Komparators das Schaltsignal der statischen Auswertung generiert. Dieser Komparator besitzt eine Hysterese zur Unterdrückung von Fehlimpulsen durch Rauschen. Der Ausgang des PLL-Decoders ist zur Abgabe des statischen Auswertesignals mit einem Eingang einer nachgeschalteten UND-Verknüpfung 37 einer Ausgangsschaltung 28 verbunden.

Die Schaltung zur dynamischen Auswertung 27 umfaßt sieben Teilblöcke zur Signalverarbeitung. Zunächst wird das Empfangssignal in einem Filter 31 gefiltert, um mögliches Fremdlicht zu unterdrücken. Danach wird es in einem Verstärker 32 verstärkt und mittels einer Schaltung 33 demoduliert. Um den dynamischen Signalanteil zu erhalten, wird das resultierende Signal in einem Bandpaß 34 gefiltert. Das dynamische Schaltsignal wird mit einem weiteren Verstärker 35 und einem Komparator 36 erzeugt. Der Komparator 36 wurde auch hier mit einer Hysterese versehen und sein Ausgang ist zur Abgabe des dynamischen Auswertesignals mit dem zweiten Eingang der UND-Verknüpfung 37 der Ausgangsschaltung 28 verbunden.

Die Ausgangsschaltung 28 besteht neben der logischen UND-Verknüpfung 37 aus einer Ausgangsstufe 38, die als Relais ausgeführt ist. Als Schaltungsart für das Relais wurde die Hellschaltung gewählt, d.h. im unbetätigten Zustand der Sicherheitseinrichtung ist das Relais angezogen. Trifft die Schließkante auf ein Hindernis, so fällt das Relais ab. Hiermit wird gewährleistet, daß das Relais auch bei Ausfall der Versorgungsspannung immer den sicheren Zustand annimmt.

Ein Testeingang 29 einer Selbsttesteinrichtung wurde mit einer ODER-Verknüpfung 41 realisiert. Bleibt der Testeingang 29 unbeschaltet oder wird er auf das Massepotential der Versorgungsspannung gelegt, so wird der Sendetakt über die Senderansteuerung 25 an die Sendediode 17 weitergegeben. In diesem Zustand wird die Sendediode 17 mit der phasenrichtigen Sendefrequenz betrieben.

Wird der Testeingang 29 mit logisch 1 versorgt, so bleibt auch der Ausgang des ODER-Gatters 41 kontinuierlich logisch 1. Somit wird die Sendediode 17 nur noch mit Gleichstrom versorgt. Dies führt dazu, daß am Phototransistor 19 des Empfanggsmoduls 10 eine Gleichspannung entsteht, die durch AC-Koppelung des folgenden Verstärkers vollständig unterdrückt wird. Die Auswerteschaltung 24 verhält sich dann genauso, als sei der Lichtstrahl abgedunkelt worden. Die Torsteuerung kann also durch Aktivieren des Testeingangs 29 und anschließendes Prüfen des Ausgangszustands die korrekte Funktion aller wichtigen elektronischen Komponenten kontrollieren.

### Bezugszeichenliste

- 1: Gebäudewand
- 2: Torblätter
- 3: Boden
- 4: Hindernis
- 5: elastomeres Hohlprofil mit innenliegender Sicherheitseinrichtung
- 6: versteifendes Abschlußprofil
- 7: Schließ- bzw. Öffnungsrichtung des Tores
- 8: Aufnahme für Sender und Empfänger
- 9: Sendermodul
- 10: Empfangsmodul
- 11: Befestigungsschrauben
- 12: Metallgehäuse
- 13: Kabelabschlußdeckel
- 14: infrarotdurchlässiger Optikabschluß
- 15: Kunstharz-Vergußmasse
- 16: Anschlußplatine des Senders
- 17: Infrarot-Sendediode
- 18: Anschlußkabel des Senders
- 19: Phototransistor
- 20: Anschlußplatine des Empfängers mit Vorverstärker
- 21: Anschlußkabel des Empfängers
- 22: Blockschaltbild des Empfängers
- 23: Blockschaltbild des Senders
- 24: Auswerteinrichtung
- 25: Senderansteuerung
- 26: Schaltung zur statischen Auswertung
- 27: Schaltung zur dynamischen Auswertung
- 28: Ausgangsschaltung
- 29: Testeingang
- 31: Filter
- 32: Verstärker
- 33: Demodulator
- 34: Bandpaß
- 35: Verstärker
- 36: Komparator
- 37: UND-Verknüpfung
- 38: Ausgangsstufe (Relais)
- 40: Ausgang

## Patentansprüche

1. Vorrichtung zur Steuerung des Schließvorgangs von im wesentlichen translatorisch verstellbaren, motorisch angetriebenen Bauteilen, insbesondere zur Schließkantenabsicherung von Türen oder Toren,
**gekennzeichnet durch**
eine an der Schließkante des Bauteils angeordnete optoelektronische Einrichtung, die ein Sendemodul (9) und ein Empfangsmodul (10) aufweist, und eine Einrichtung (24) zur Ansteuerung der optoelektronischen Einrichtung sowie zur Abgabe eines Steuersignals zum Abbremsen und/oder zur Richtungsumkehr des Bauteils.

2. Vorrichtung nach Anspruch 1, **dadurch gekennzeichnet,** daß die Auswerteinrichtung (24) eine Schaltung zur dynamischen Auswertung eines Ausgangssignals des Empfangsmoduls (10) enthält, die bei einer einstellbaren Veränderung des Ausgangssignalpegels das Steuersignal zum Abbremsen und/oder zur Richtungsumkehr des Bauteils abgibt.

3. Vorrichtung nach Anspruch 2, **dadurch gekennzeichnet,** daß die Auswerteinrichtung (24) eine Schaltung zur statischen Auswertung (26) eines Ausgangssignals des Empfangsmoduls (10) enthält.

4. Vorrichtung nach mindestens einem der vorangehenden Ansprüche, **dadurch gekennzeichnet,** daß die optoelektronische Einrichtung in einem entlang der Schließkante des Bauteils verlaufenden elastischen Hohlprofil (5) angeordnet ist.

5. Vorrichtung nach mindestens einem der vorangehenden Ansprüche, **dadurch gekennzeichnet,** daß das Sendemodul (9) und das Empfangsmodul (10) an verschiedenen Stellen entlang der Schließkante des Bauteils aufeinander ausgerichtet sind.

6. Vorrichtung nach mindestens einem der vorangehenden Ansprüche 1 bis 4, **dadurch gekennzeichnet,** daß das Sendemodul (9) und das Empfangsmodul (10) der optoelektronischen Einrichtung als Reflexionslichtschranke ausgeführt sind, wobei der Sender (23) und der Empfänger (22) des Sende- und Empfangsmoduls (9, 10) gemeinsam auf der einen Seite des Bauteils angeordnet sind und am gegenüberliegenden Ende der Schließkante ein Retroreflektor angeordnet ist, der das vom Sender (23) ausgestrahlte Licht zum Empfänger (22) reflektiert.

7. Vorrichtung nach mindestens einem der vorangehenden Ansprüche, **dadurch gekennzeichnet,** daß die Auswerteinrichtung (24) in das Gehäuse des Senders (23) und Empfängers (22) der optoelektronischen Einrichtung (22, 23) integriert ist.

8. Vorrichtung nach mindestens einem der vorangehenden Ansprüche, **dadurch gekennzeichnet,** daß das Sendemodul (9) und das Empfangsmodul (10) auf der Sende- und Empfangsseite einen optischen Abschluß (14) aufweisen, der für infrarotes Licht durchlässig und für sichtbares Licht undurchlässig ist.

9. Vorrichtung nach mindestens einem der vorangehenden Ansprüche, **dadurch gekennzeichnet,** daß das Sendemodul (9) und das Empfangsmodul (10) mit einer Kunstharz-Vergußmasse (15) ausgegossen sind.

10. Vorrichtung nach mindestens einem der vorangehenden Ansprüche, **dadurch gekennzeichnet,** daß die Auswerteinrichtung (24) eine Selbsttesteinrichtung aufweist, die auf ein externes Testsignal die Funktion der Sicherheitsabschaltung testet.

11. Vorrichtung nach mindestens einem der vorangehenden Ansprüche, **dadurch gekennzeichnet,** daß die Auswerteinrichtung (24) eine Einrichtung (27) zur dynamischen Auswertung des vom Empfänger (22) abgegebenen Steuersignals aufweist.

12. Vorrichtung nach mindestens einem der vorangehenden Ansprüche, **dadurch gekennzeichnet,** daß die Auswerteinrichtung (24) eine Einrichtung zur statischen Auswertung des vom Empfänger (22) abgegebenen Ausgangssignals aufweist, das zusammen mit dem Ausgangssignal der Einrichtung (27) zur dynamischen Auswertung des vom Empfänger (22) abgegebenen Steuersignals an den Eingang einer logischen UND-Verknüpfung (37) gelegt ist, dessen Ausgang mit der Ausgangsstufe (38) verbunden ist.

13. Vorrichtung nach Anspruch 10, **dadurch gekennzeichnet,** daß die Selbsttesteinrichtung ein ODER-Glied (41) aufweist, dessen Eingänge mit einem Testeingang (29) verbunden und mit einem Sendetaktsignal beaufschlagt ist und dessen Ausgang über einen Verstärker mit dem Sender (23) verbunden ist.
